(19) Europäisches Patentamt
European Patent Office
Office européen des brevets

(11) **EP 2 843 376 A1**

(12) **EUROPEAN PATENT APPLICATION**
published in accordance with Art. 153(4) EPC

(43) Date of publication:
**04.03.2015 Bulletin 2015/10**

(51) Int Cl.:
**G01F 15/02** (2006.01)       **G01F 15/00** (2006.01)
**G01F 25/00** (2006.01)

(21) Application number: **13797220.4**

(22) Date of filing: **27.05.2013**

(86) International application number:
**PCT/KR2013/004584**

(87) International publication number:
**WO 2013/180427 (05.12.2013 Gazette 2013/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.05.2012 KR 20120057070**

(71) Applicant: **Enbac Co. Ltd.**
**Daejeon (KR)**

(72) Inventor: **YOON, Jung Joong**
**Daejeon 305-752 (KR)**

(74) Representative: **Romano, Giuseppe et al**
**Società Italiana Brevetti S.p.A**
**Piazza di Pietra, 39**
**00186 Roma (IT)**

(54) **GAS FLOW METER PROGRAM OF CONSTRICTION DEVICE AND FLOW MEASUREMENT METHOD AND FLOW MEASUREMENT DEVICE USING SAME**

(57)    A gas flow measuring method, a gas flow measuring program thereof, and a gas flow measuring device. A type of gas type to be measured, a temperature, a pressure, a differential pressure, an inlet diameter of a flow measuring device having a constriction device and a throat diameter of the flow measuring device are input. An input constant according to the gas type, the temperature and the pressure, selected from an input constant database (adiabatic index, viscosity and density) according to the gas type, is input. An expansion coefficient is calculated based on the input adiabatic index, a diameter ratio and a pressure ratio. A runoff coefficient is corrected. The flow rate of the gas is calculated by substituting the calculated expansion coefficient, the corrected runoff coefficient, the differential pressure, the throat diameter, the diameter ratio, and the gas density into a gas flow measurement formula.

[Fig. 4]

**Description**

**Technical Field**

The present invention relates to a gas flow measuring method in a gas flow meter having a constriction device using a method of simply correcting a gas expansion coefficient and a runoff coefficient by calculating an adiabatic index, a vapor density, and a viscosity coefficient in array functions using a thermodynamic relationship and subsequently obtaining adiabatic indices, gas densities and gas viscosities according to respective temperature and pressure conditions; a gas flow measuring program thereof; and a gas flow measuring device.

**Related Art**

When measuring a gas sensitive to a temperature or pressure (a real gas, a mixture gas, a general gas, a natural gas, or the like) using a flow meter, an accurate value of flow rate cannot be displayed without correction based on the difference from the ambient temperature or pressure. Without the correction according to a temperature or pressure, the flow rate shows significant variations according to times at which and places in which it is measured. Accordingly, it is reasonable for neither a manufacturer nor a consumer.

In the related art, after the flow rate of a gas is measured, the measured flow rate is subjected to correction according to a temperature or pressure using a single computation equation. However, since this correction uses a single computation equation, a final product has differences according to the gas type. Therefore, temperature or pressure correction must be performed by selecting an optimum computation equation according to the gas type so that the most accurate flow rate can be displayed.

For this, a gas flow meter of the related art measures the flow rate using correction factors according to gas types. However, there are drawbacks in that the correction factors are inaccurate, and that the flow rate of a gas without a correction factor cannot be measured.

Accordingly, Korean Patent Application Publication No. 10-2006-0108318 proposed a flow rate computation device for correcting the temperature and pressure of a gas.

In this related art, a flow rate input part receives a value measured by the flow meter, and a measured data input part receives a temperature and pressure from an external measuring device. When a gas to be corrected is selected using a key input part, a microprocessing unit (MPU) computes data input from the flow rate input part and the measured data input part based on a calculation equation selected according to the gas. A result computed by the MPU is displayed on a liquid crystal display (LCD) module, is stored in a memory module, and is output and transmitted outward through an output part and a communications part. The temperature and pressure correction is carried out using the computation equation preset to the gas to be measured such that an accurate correction value can be obtained.

**Disclosure**

**Technical Problem**

Accordingly, the present invention has been made keeping in mind the above problems occurring in the prior art, and an object of the present invention is to provide a gas flow measuring method that is simply applicable to any type of gas, an application program of the same method, and a gas flow measuring device.

In particular, in the above-described related art, the process of computing input parameters is too complicated. This requires an excessively high amount of the MPU capacity, thereby excessively slowing down the speed of computation. In addition, there are many errors in numerical values in the computation process, which cause the problem of low accuracy.

The present invention is intended to provide a high-accuracy flow rate measuring method by completely overcoming the problems of the related art.

In addition, when a flow meter having a constriction device (a flow rate measuring device or instrument in which a constriction plate having a small hole (also referred to as an orifice plate or a nozzle plate) is disposed inside a pipe in order to constrict a flow, and measures a flow rate based on a difference in the pressure between the upstream and the downstream of the constriction plate) is generally applied to measure the flow rate of liquid, the accuracy of the measurement is relatively high. However, it is difficult to apply the flow meter to gas, of which the volume changes depending on temperature and pressure and the composition ratio varies depending on the types of the gas. Therefore, the flow meter having a constriction device is rarely applied to gas despite of the simple structure thereof. Accordingly, the present invention is intended to provide a high-accuracy flow rate measuring method applicable to the flow meter having a constriction device of the related art, an application program of the same method, and a flow rate measuring device.

The present invention is also intended to provide a flow rate measuring method able to accurately measure the flow rate of any single gas, a flowing mixture gas and a gas, the mixture ratios of which change with time, an application program of the same method, and a flow rate measuring device.

**Technical Solution**

In order to accomplish the above objects, the present invention provides a gas flow measuring method including: a process of inputting a type of a gas, a flow rate of which is to be measured, a temperature T, a pressure P, a differential pressure dP, an inlet diameter D of a flow measuring device having a constriction device and a throat diameter d of the flow measuring device; a process of inputting an input constant according to the type of the gas, the temperature and the pressure selected from an input constant database (adiabatic index k, gas viscosity $\mu$ and gas density p) according to the type of the gas, the flow rate of which is to be measured; a process of calculating an expansion coefficient $\varepsilon$ based on the input adiabatic index k, a diameter ratio $\beta$ and a pressure ratio $\tau$; a process of correcting a runoff coefficient C; and a process of calculating the flow rate of the gas by substituting the calculated expansion coefficient, the corrected runoff coefficient, the differential pressure, the throat diameter, the diameter ratio, and the gas density into a gas flow measurement formula.

In addition, according to the present invention, the process of correcting the runoff coefficient may include: a process of inputting a specific runoff coefficient; a process of setting the gas flow rate through calculation based on the gas flow measurement formula; a process of setting a Reynolds number Re through calculation based on an Re calculation formula; a process of correcting the runoff coefficient through calculation based on a runoff coefficient calculation formula; and a process of repeating the process of correcting the runoff coefficient by two to ten times.

Furthermore, according to the present invention, the input constant according to the type of the gas, the temperature and the pressure may be estimated and input by applying interpolation or extrapolation to the input constant database (adiabatic index k, gas viscosity $\mu$ and gas density p) according to the type of the gas, the flow rate of which is to be measured.

In addition, according to the present invention, the gas flow measuring method may include: a process of measuring and inputting content ratios of the gas, the flow rate of which is to be measured, the gas comprising a mixture of a plurality of gases; and a process of deriving a single input constant through calculation using the input content ratios and the input constant of the gas, the flow rate of which is to be measured.

Furthermore, according to the present invention, the gas flow measuring method may include: a process of measuring and inputting the content ratios of the gas, the flow rate of which is to be measured, the gas comprising a mixture of a plurality of gases; and a process of deriving a single input constant through calculation using the input content ratios and the input constant of the gas, the flow rate of which is to be measured.

The present invention also provides a gas flow measuring program having the above-described gas flow measuring method, created by a programming language.

The present invention also provides a gas flow rate measuring device including: a gas flow rate measuring body 10; a pressure sensor 20, a temperature sensor 30, a differential pressure sensor 40 and a display part 50 disposed on the body; an information processing device 60 with the gas flow measuring program being installed therein; and a preset input constant database 70 usable by the gas flow measuring program.

In addition, according to the present invention, the information processing device may further include a gas selecting part and a function selecting part.

**Advantageous Effects**

The present invention is applicable regardless of the types of gas, temperatures and pressures.

In addition, input constants (adiabatic index k, gas viscosity $\mu$ and gas density p), which are previously measured for and set to a specific gas, are arranged into a database, such that the input constants can be read out from the database for use. A computing device requiring neither a high degree of calculation nor a large amount of capacity can be used, thereby rapidly and accurately measuring a gas flow rate.

There is an advantage in that the present invention is applicable to all of a single gas, a mixture gas, and another mixture gas, the contents of which are variable.

In addition, according to the present invention, the gas flow measuring method and the gas flow measuring device are readily applicable to a flow measuring device having a constriction device.

Furthermore, the gas flow measuring device according to the invention has a simple structure and thus is fabricated at a low cost, thereby achieving high economic competitiveness.

**Description of Drawings**

FIG. 1 is a database (matrix) of adiabatic indices k for methane depending on temperature and pressure according to an embodiment of the present invention;

FIG. 2 is a database (matrix) of gas densities ρ for methane depending on temperature and pressure according to an embodiment of the present invention;

FIG. 3 is a database (matrix) of gas viscosities μ for methane depending on temperature and pressure according to an embodiment of the present invention;

FIG. 4 is a flowchart of a gas flow measuring method using a preset input constant database according to the present invention;

FIG. 5 is a flowchart of a process of correcting a runoff coefficient C in the gas flow measuring method using a preset input constant database according to the present invention;

FIG. 6 is a flowchart of a process of obtaining an input constant when the composition of a mixture gas changes in the gas flow measuring method using a preset input constant database according to the present invention; and

FIG. 7 is a view of the structure of a gas flow measuring device using the gas flow measuring method.

**Mode for Invention**

Reference will now be made in detail to the present invention.

The present invention provides a program able to facilitate correction when measuring the flow rate of not only incompressible liquid but also gas that is compressible depending on temperature and pressure in a common flow meter having a constriction device, as well as a gas flow measuring method and a gas flow measuring device using the same program.

Herein, the flow meter having a constriction device indicates an apparatus or device that is provided with a constriction device (referred to as an orifice plate or a nozzle plate) disposed inside a pipe, the constriction device having a small hole to constrict a flow, and measures a flow rate based on a difference in the pressure between the upstream and the downstream of the constriction device.

When the flow meter having a constriction device is applied to measure the flow rate of liquid, the accuracy of the measurement is generally high. However, it is difficult to apply the flow meter having a constriction device to gas, of which the volume changes depending on temperature and pressure and the compression ratio varies depending on the types of the gas.

Although a gas flow meter of the related art measures the flow rate of a gas using a correction factor of the gas, there is a drawback in that the correction factor is inaccurate. There is another problem in that the flow rate of a gas without a correction factor cannot be measured, as was described above.

A flow meter having a constriction device in an isentropic system has the following flow rate measurement formula:

$$q_m = \frac{c}{\sqrt{1-\beta^4}} \in \frac{\pi}{4} d^2 \sqrt{2 dp \rho_1} \quad \text{--- (Formula 1)}$$

Here, $q_m$ indicates a mass flow rate [kg/s], which is the flow rate of a fluid that passes through.

β indicates a diameter ratio, which is the ratio between the inlet diameter and the throat diameter (diameter ratio) of the flow meter having a constriction device.

C indicates a discharge coefficient, which is a runoff coefficient.

ε indicates a gas expansion coefficient.

d indicates the throat diameter of the flow meter having a constriction device.

dP indicates a differential pressure [Pa], which is a difference in the pressure between the inlet and the throat of the flow meter having a constriction device.

ρ indicates a density [kg/m$^3$], which is the density of a specific gas to be measured.

In order to measure the flow rate of the specific gas in this manner, it is required to carry out the process of obtaining the gas expansion coefficient ε and the gas density ρ, as well as a correction factor C, and substituting the obtained values to the above-mentioned flow rate measurement formula.

However, the above-described values, such as the gas expansion coefficient ε, the gas density ρ and the runoff coefficient C, are determined by the temperature and pressure of the gas that flows. Therefore, there are drawbacks in that the process of measuring the temperature and pressure and computing the gas expansion coefficient $\varepsilon$, the gas density $\rho$ and the runoff coefficient C depending on the measured temperature and pressure in order to measure the flow rate of the specific gas becomes complicated such that the process cannot be executed without the use of a powerful computer having a large amount of memory and a large number of central processing units (CPUs).

In addition, even in the case where a typical computer of the related art is used, it takes a long time, which is problematic. It is impossible to promptly measure the flow rate of the gas, thereby leading to poor practicability.

In contrast, the present invention provides a method able to promptly obtain the gas expansion coefficient $\varepsilon$, the gas density $\rho$ and the runoff coefficient C using an electronic computing device having a very small capacity and a method able to accordingly measure a flow rate in a rapid manner.

1. Process of Constructing Database of Input constants (adiabatic index k, gas viscosity $\mu$, gas density p)

The technical characteristics of the present invention are to provide a flow rate measuring method using matrix-shaped databases previously constructed by a user by arranging experimentally-obtained coefficients of a specific gas required for the measurement of the flow rates of the gas, such as adiabatic index k, gas viscosity $\mu$ and gas density $\rho$. The adiabatic index k, gas viscosity $\mu$ and gas density $\rho$ of the specific gas to be measured at a specific temperature and pressure are input by being easily selected from the databases or by being easily calculated (computed) using the databases without necessity for complicated computation.

Therefore, the present invention uses the matrix structures (databases) in the flow rate measuring method, and measures the flow rate by applying them to a differential pressure flow meter. Unlike a related-art flow rate measuring method using linear correction, calculation is carried out on previously-input values through mathematical computation by directly detecting physical measurements using the constriction device. Therefore, the flow rate measuring method may be referred to as a direct calculation method without requiring linear correction.

In addition, since complicated computation is not required, it is possible to provide a method able to significantly reduce the time for calculation, reduce the capacity of a computer, and measure a very accurate flow rate of the gas.

According to the present invention, the matrix-shaped databases are previously constructed by arranging the values of adiabatic index k, gas viscosity $\mu$ and gas density $\rho$ of a specific gas (or a gas in which two or more types of gases are mixed), which are experimentally obtained in advance according to the temperatures and pressures, such that the databases are used in the flow rate measuring method, which will be described later.

These values of adiabatic index k, gas viscosity $\mu$ and gas density $\rho$ may be experimentally obtained for a specific gas (or a gas in which two or more types of gases are mixed). In addition, these values may be obtained using large amounts of experimental data for a variety of gases, such as thermal conductivity, thermal expansion coefficient or core pressure, as well as data obtained using thermodynamic formulae.

Here, k is an isentropic exponent, which is also referred to as an adiabatic index.

In addition, the gas viscosity $\mu$ and the gas density $\rho$ correspond to constants that vary depending on specific values of temperature and pressure.

Therefore, a database is constructed in advance through experiments for each of the adiabatic index k, the gas viscosity $\mu$ and the gas density $\rho$ by previously obtaining values of the adiabatic index k, the gas viscosity $\mu$ and the gas density $\rho$ for a specific gas.

Herein, the values of the adiabatic index k, the gas viscosity $\mu$ and the gas density $\rho$, which are constructed in advance, are defined "input constants."

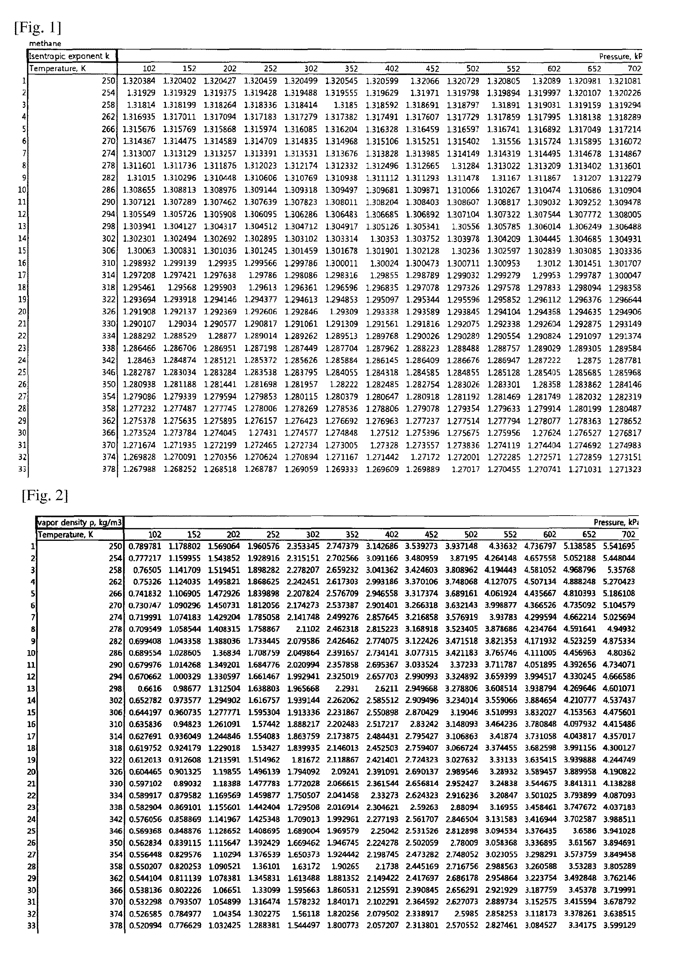

FIG. 1, FIG. 2 and FIG. 3 show databases for methane as an example in which input constants are constructed.

FIG. 1 is a table showing a database of adiabatic indices k for methane depending on temperature and pressure.
FIG. 2 is a table showing a database of gas viscosities $\mu$ for methane depending on temperature and pressure.

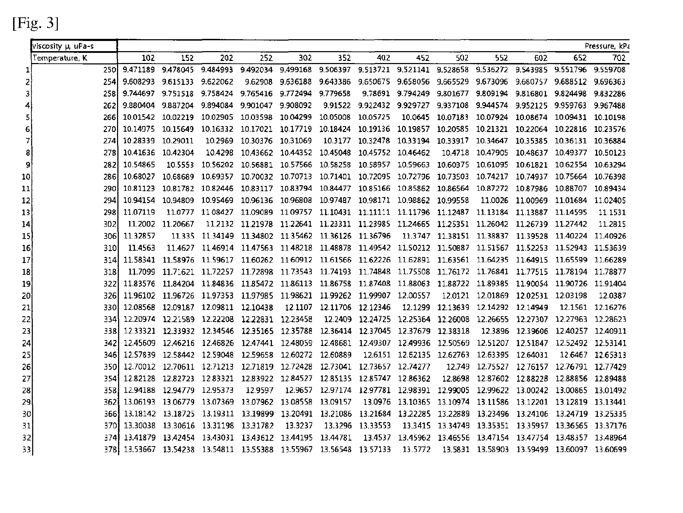

FIG. 3 is a table showing a database of gas densities $\rho$ for methane depending on temperature and pressure.

In the case where the gas to be measured is composed of a single component as in the above-described embodiment, or is composed of a mixture of several gases with predetermined ratios, for example, 50% of gas X and 50% of gas Y are uniformly introduced into the flow rate measuring device, the adiabatic index k, the gas viscosity $\mu$ and the gas density $\rho$ of a gas in which gas X and gas Y are mixed are obtained and arranged in a database.

2. Gas Flow Measuring Method Using Input Constant Database

The present invention provides a gas flow measuring method using the above-described database of input constants.

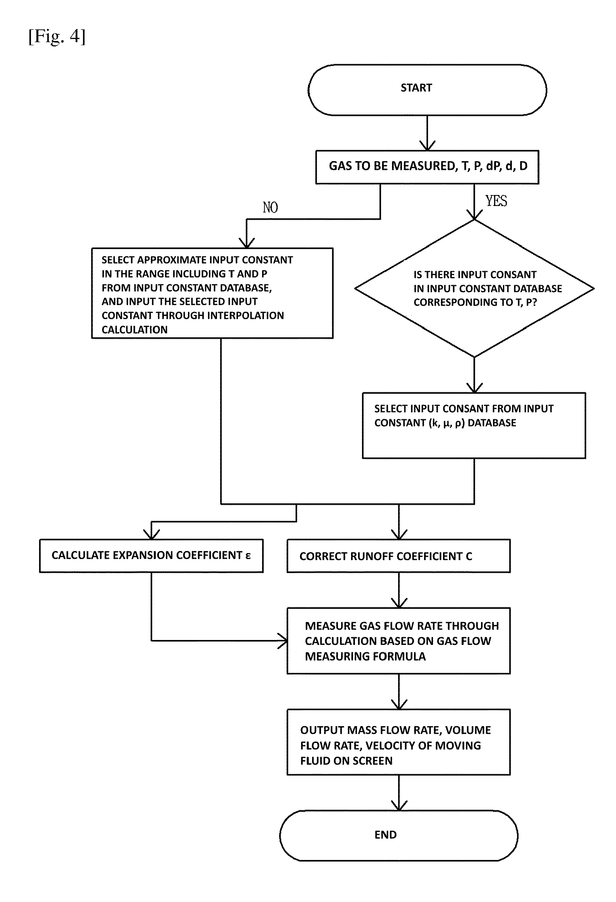

As shown in FIG. 4, the present invention carries out the process of inputting a gas type and inputting the inlet diameter D and the throat diameter d of the gas flow measuring device having a constriction device.

The inlet diameter D and the throat diameter d may be preset or may be corrected or set by a user.

The inlet diameter D and the throat diameter d are used as values with which the diameter ratio $\beta$ is obtained.

The diameter ratio is also used as a value with which the gas expansion coefficient $\varepsilon$, which will be described later, is obtained.

In addition, the process of obtaining and inputting a temperature T, a pressure P and a differential pressure dP of the gas to be measured in the gas flow measuring device having a constriction device is carried out.

The gas flow measuring device having a constriction device has a temperature sensor attached thereto, the temperature sensor measuring the temperature of the flowing gas.

The temperature sensor indicates a typical device or instrument that measures a temperature.

In addition, a pressure sensor is attached to the gas flow measuring device.

The pressure sensor indicates a device or instrument that measures the pressure within the tube and the pressure right after the passage through the throat in the gas flow measuring device having a constriction device.

The differential pressure dP indicates the difference between the pressure within the tube and the pressure right after the passage through the throat in the gas flow measuring device having a constriction device.

The differential pressure is obtained using the pressure sensor in a simple manner.

The pressure sensor and the temperature sensor may input the obtained values, such as the pressure, differential pressure and temperature-related values, by digitalizing and transmitting them.

The digitalization of the values measured by the sensors may be performed by a microcontroller unit (MCU) attached to the sensors, the MCU having an electronic circuit or a semiconductor circuit being attached thereto.

Through the above-described process, the temperature T, the pressure P and the differential pressure dP are obtained and consequently are input as data to be processed in the subsequent process.

(1) The present invention carries out a process of selecting and inputting values of adiabatic index k, gas viscosity $\mu$ and gas density $\rho$ corresponding to a specific temperature and pressure from the databases for adiabatic index k, gas viscosity $\mu$ and gas density $\rho$, which are the above-mentioned input constants, using the temperature T and the pressure P, which were obtained through the above process, for a specific gas or a mixture gas having predetermined composition ratios. (Herein, this input process is defined as a "type in which the input condition composition ratios are fixed.")

In this process, the adiabatic index k, the gas viscosity $\mu$ and the gas density $\rho$ corresponding to the specific temperature and pressure of the specific input gas (or the gas in which two or more gases are mixed) are automatically selected.

The process of selecting a value corresponding to a specific value in this manner according to the present invention may, of course, be realized by a common electronic computing device or calculator typically including a memory and a CPU, in which an application program is accordingly installed.

If there are no input constants in the input constant database corresponding to the specific temperature and pressure, a temperature and pressure close to the specific temperature and pressure may be collected and applied to interpolation or the like in order to obtain input constants, including the adiabatic index k, the gas viscosity $\mu$ and the gas density $\rho$, corresponding to the specific temperature and pressure.

According to the interpolation, even in the case in which the shape of the function f(x) of a variable x is unknown, if function values f (xi) of two or more variables xi (i=1, 2,..., n) having any intervals (regardless of being equal or unequal intervals) are known, a function value of a variable x between the two or more variables is presumed. The interpolation is used when presuming a value at an unobserved point based on an observed value that has been obtained through an experiment or observation, or obtaining a function value that is not present in a function table, such as a log table. A simplest method obtains a function value to be obtained by drawing a curve along points in each of which a variable is set as an x coordinate and a known function value for the variable is set as a y coordinate.

It is also possible to obtain a function value based on the following formula:

$$\mathtt{f(x)=f(x0)+[\{f(x1)-f(x0)\}/(x1-x0)]*(x-x0),}$$

in which the function f(x) is approximately represented in vicinity of variables x0 and x1:

This is a simple formula, which is referred to a proportional part or linear interpolation. Since the interval between x0 and x1 is set to be sufficiently small as in the log table or a trigonometric function table, the linear interpolation is used. For more precise calculation, the Newton's interpolation formula may be used.

A method of obtaining an approximate value of f(x) for a variable x outside x1 and xn, which is a countermeasure of the interpolation, is referred to as extrapolation.

Therefore, the present invention can employ both the interpolation and the extrapolation.

The method of obtaining input constants using the interpolation or the extrapolation according to the present invention may be realized using a calculation program made from a calculation formula of the interpolation or the extrapolation.

An embodiment according to the present invention in which the interpolation is applied using the input constant database will be described as follows.

In FIG. 1, when the temperature is 252K and the pressure is 132 kPa, a value of an adiabatic index k cannot be selected.

Therefore, in this case, the interpolation, which is typically used as described above, can be used.

Since the temperature 252K is between 250 K and 254 K and the pressure 132 kPa is between 102 kPa and 152 kPa, the value to be obtained can be simply calculated using the interpolation.

As one example, a k3 value at a pressure of 132kPa may be simply calculated by selecting 250 K and adiabatic indices k1 and k2 corresponding to 102 kPa and 152 kPa and substituting these values to the following formula:

$$k3=k1+\{(k2-k1)/(152-102)\}*(132-102)$$

Likewise, selecting 254 K and adiabatic indices k4 and k5 corresponding to 102 kPa and 152 kPa and substituting these values to the above formula derives the following formula:

$$k6=k4+\{(k5-k5)/(152-102)\}*(132-102)$$

Accordingly, a k6 value at 132kPa may be obtained.

In addition, a k7 value at 252 K and 132kPa may be obtained using the above-mentioned k3 and k6 values, in a simple manner based on the above-mentioned formula.

That is, the k7 value may be obtained from k7=k3+{(k6-k3)/(254-250)}*(252-250).

All input constants at the temperature T and the pressure P, which are absent in the input constant database, may be simply obtained based on the above-described interpolation method.

That is, it is possible to obtain the density ρ and the viscosity μ of a gas at a specific temperature and pressure, which are absent in the databases, based on the interpolation as described above using the databases shown in FIG. 2 and FIG. 3.

(2) In addition, according to the present invention, unlike the case in which the single gas or the mixture gas in which gases are mixed at fixed ratios, a process of obtaining an input constant applicable to the case in which the ratios of the mixture gas are variable with time may be carried out. (Herein, this case is defined as the case in which inlet condition composition ratios are variable.)

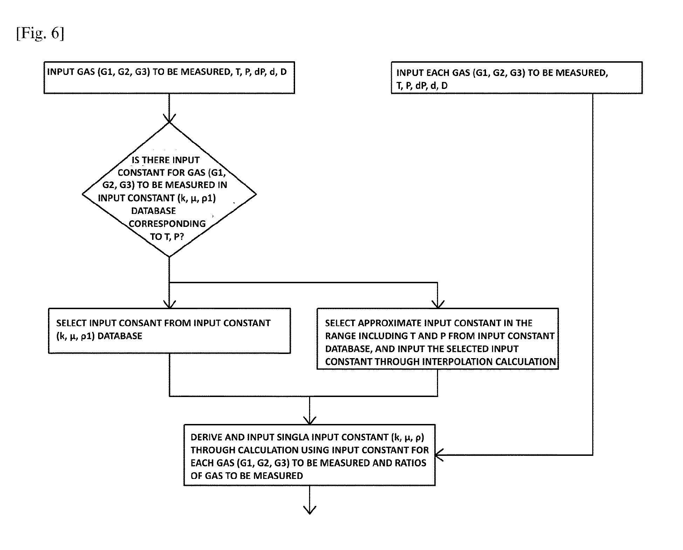

As shown in FIG. 6, when the inlet conditions are variable, a process of obtaining an adiabatic index k, a gas viscosity μ and a gas density ρ using the above-described "input constant databases" is carried out.

When the inlet conditions are variable, the compositions of gases G1 and G2 to be measured change with time. Therefore, the content ratios R of the compositions of the gases to be measured are measured using a composition ratio measuring device.

The content ratio measuring device that measures the content ratios of the compositions indicates a device or means having a sensor able to measure the contents of a gas composition.

The ratio values measured by the content ratio measuring device may be input by being digitalized and transmitted. The digitalization of the values measured by the sensor may, of course, be performed by a microcontroller unit (MCU) attached to the sensor, the MCU having an electronic circuit or a semiconductor circuit being attached thereto.

As described above, the composition content sensor is provided in the flow measuring device having a constriction device in order to measure the contents of the gas composition, and the measured values are input to the following "computing process of deriving single input constants."

The computing process for deriving single input constants is as follows:

First, a process of deriving an input constant of each of gases G1 and G2, the composition contents of which are variable, is carried out as in the process of deriving an input constant in the "type in which the input condition contents are fixed."

Therefore, input constants for G1 and G2 are derived when the process of selecting input constants according to the specific temperature and pressure from the input constant databases or the process of computing and deriving the input constants through the above-described interpolation or the like is carried out.

The derived input constants (adiabatic index k, gas viscosity $\mu$ and gas density p) for G1 and G2 are estimated on the assumption that these input values are present 100%.

Therefore, single input constants k, $\mu$ and $\rho$ for a gas mixed in this manner are derived through multiplication of the above-mentioned composition content ratios.

Specifically, referring to the above-described example, G1(k, $\mu$, $\rho$) *R1+G2(k, $\mu$, $\rho$) *R2 leads to corrected single input constants k, $\mu$ and $\rho$ that may be regarded the same as those of a single gas G. Here, R1 indicates a content ratio for G1, and R2 indicates a content ratio for G2.

When the single input constants are determined in this manner, the subsequent process is carried out as described below.

According to the present invention, a process of obtaining a pressure ratio $\tau$ using the above-mentioned differential pressure data is performed.

The pressure ratio is easily obtained using already-known data, such as P (pressure) and dP (differential pressure), as well as the following formula.

The pressure ratio formula is (P-dP/1000)/p, which is obtained by simple computation.

In the above formula, dP*(1/1000) is set for the purpose of unit conversion (i.e. conversion to kPa), and it may be set different in the case of conversion to a different unit Pa.

Of course, according to the present invention, the thermodynamic law makes it possible to convert a constant before a variable for the purpose of unit conversion in all formulae as in the pressure ratio formula.

According to the present invention, a process of obtaining a gas expansion coefficient $\varepsilon$ using the above-mentioned values, such as the adiabatic index k, the diameter ratio $\beta$ and the pressure ratio $\tau$, is carried out.

The above-mentioned gas expansion coefficient $\varepsilon$ is a function under the influence of temperature and pressure, and is obtained through computation using the following formula:

$$\epsilon = \sqrt{\left(\frac{kT^{2/k}}{k-1}\right)\left(\frac{1-\beta^4}{1-\beta^4\tau^{2/k}}\right)\left(\frac{1-\tau^{(k-1)/k}}{1-\tau}\right)} \quad \text{---} \quad \text{(Formula 2)}$$

$\tau$ indicates a pressure ratio, which is a ratio in the pressure between the inlet and the throat of the flow measuring device having a constriction device.

$\beta$ indicates a diameter ratio, as was described above.

The process of obtaining the gas expansion coefficient $\varepsilon$ is carried out by inputting the values k, $\tau$ and $\beta$ to the above formula.

Therefore, the gas expansion coefficient $\varepsilon$ obtained using the above formula becomes a gas expansion coefficient of a specific gas at a specific temperature and pressure.

A process of obtaining a runoff coefficient C using the above-obtained gas expansion coefficient is carried out.

When an accurate value of the runoff coefficient is obtained, a flow rate (mass flow rate) $q_m$ is simply measured

by substituting the value to the formula 1: $q_m = \frac{c}{\sqrt{1-\beta^4}} \epsilon \frac{\pi}{4} d^2 \sqrt{2dp\rho_1}$ , the formula with which the gas flow rate is measured.

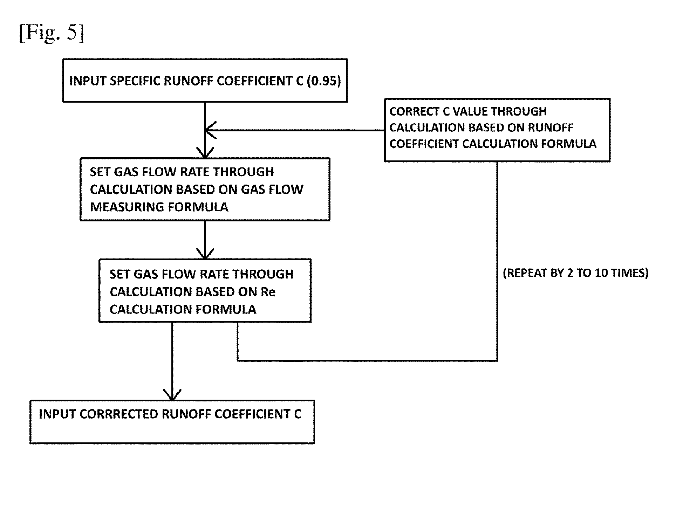

According to the present invention, as shown in FIG. 5, a process of obtaining a first measurement of flow rate by inputting the runoff coefficient C as any specific number is carried out.

According to the present invention, the process of obtaining the measurement of flow rate is preferably carried out by setting C in the range from 0.9 to 0.9999, and preferably, to 0.95. (This case is an example in which a constriction device having a nozzle is used.)

Therefore, an input value of C may be about 0.65 in the case of an orifice and about 0.93 in the case of a venturi.

An input value of C is 0.95 when a nozzle is used. As described above, a first flow rate value $q_{m1}$ is computed when $\beta$, dP, d and $\rho$ are input.

In addition, as for the above-mentioned initial runoff coefficient C, although it is preferable that a C value is directly input, the C value may be obtained through computation using the following formula by setting an initial value of Re. In this case, the initial value of Re is typically 1000000, and a $\beta$ value is an input value.

When the Re value is input in this manner, a value approximate to the runoff coefficient C(=0.95) is derived, and the subsequent process is carried out in the same manner.

$$C = 0.9965 - 0.00653 \times \sqrt{\frac{\beta}{Re} \times 1000000} \quad \text{--- (Formula 4)}$$

The Formula 4 above is a formula for obtaining a runoff coefficient for a nozzle.

Therefore, a different formula may be applied when an orifice, a venturi or the like of a constriction device is used.

That is, a typical formula for estimating a runoff coefficient may be expressed as follows:

C=a+b (β/Re)$^{n}$ --- (representative formula for runoff coefficient)

Here, a and b are constants, and n is an exponent.

In this manner, according to the process of correcting a runoff coefficient according to the present invention, a, b and n may be experimentally obtained from the representative formula for the runoff coefficient according to which constriction device is used, and a runoff coefficient estimation formula according to each constriction device may be used.

In addition, a process of correcting the runoff coefficient C using the first value of flow rate is carried out.

The C value is a function of Re (Reynolds number). The C value changes in response to a change in the Re value.

Therefore, Re is obtained from the following formula:

$$Re = \frac{4q_m}{\pi (\mu / 1000000) D} \quad \text{--- (Formula 3)}$$

The Re value is obtained when the above-obtained first flow rate $q_{m1}$ is substituted to the above formula and the process of inputting the gas viscosity $\mu$ and the tube diameter D is carried out.

A process of obtaining a corrected value of C [C1] using the above-obtained Re value is carried out.

The corrected C value may be obtained through the computation using the following formula:

$$C = 0.9965 - 0.00653 \times \sqrt{\frac{\beta}{Re} \times 1000000} \quad \text{--- (Formula 4)}$$

The corrected C value is obtained by substituting the Re value and the β value, which were previously obtained, to the above formula.

Of course, the C value when using an orifice or venturi in addition to the above-mentioned nozzle is obtained through computation using the above representative formula for estimating a runoff coefficient.

A process of computing a second flow rate $q_{m2}$ is carried out by substituting above-obtained C1, i.e. the corrected C value, to Formula 1 above: $q_m = \frac{c}{\sqrt{1-\beta^4}} \in \frac{\pi}{4} d^2 \sqrt{2dp\rho_1}$ .

When the second flow rate is obtained, a corrected value of Re is obtained again using the second flow rate $q_{m2}$.

A re-corrected value of C may be obtained using the above-derived Re value.

The process of correcting the runoff coefficient C as above is repeatedly carried out by about two to ten times.

It is preferable that this process is repeatedly carried out by three to five times.

Through the above-described repetition, an accurate value of runoff coefficient C may be derived.

When the accurate value of runoff coefficient C is derived through the correction in this manner, it is possible to accurately measure the flow rate of any gas.

Therefore, a process of inputting the runoff coefficient C obtained through the correction process of obtaining the accurate value of the runoff coefficient C, as well as ε, d and dP and the input constant (gas density p) derived in the above process, to above-described Formula 1 is carried out.

$$q_m = \frac{c}{\sqrt{1-\beta^4}} \in \frac{\pi}{4} d^2 \sqrt{2dp\rho_1} \quad \text{---} \quad \text{(Formula 1)}$$

Through this process, an accurate mass flow rate $q_m$ of the flowing gas may be obtained.

In addition, a process of obtaining a volume flow rate based on the mass flow rate may be carried out.

The volume flow rate $q_v$ is obtained by the following formula: $(q_v) = q_m / \rho [m^3/s]$.

In addition, a process of obtaining a velocity of a moving fluid based on the volume flow rate may be carried out.

The velocity of a moving fluid V is obtained by the following formula: $V = \frac{q_V}{\frac{\pi}{4}(D)^2}$ $[m/s]$.

In addition, a process of obtaining a sound speed based on the pressure P, the gas density $\rho$ and the adiabatic index k may be carried out.

The sound speed a is obtained by the following formula: $a = \sqrt{k\left(\frac{p \times 1000}{\rho}\right)}$ $[m/s]$.

In addition, a Mach number is obtained by the following formula: M=V/a [M].

The above-described formulae are simple numerical expressions, which may be realized using a simple program or computing device.

Therefore, as described above, the process of deriving a value based on any of the formulae (or numerical expressions) consistently used in the present invention is carried out by an application program that is programmed for these formulae or a typical computing device.

In addition, a process of displaying the above-described values, including the mass flow rate, the volume flow rate, the velocity of a moving fluid and/or the Mach number, is carried out.

As described above, the present invention provides the method able to accurately measure the flow rate of a gas through the above processes.

The above-described gas flow measuring device according to the present invention may be realized as a computer readable medium including program instructions with which a computer, a calculator, a computing device, an information processing device, or the like can execute an operation.

The computer readable medium may include program instructions, a data file, a data structure, or the like, which are provided alone or in a combination.

The medium or program instructions may be specially designed or constructed for the present invention or may be known to and readily used by a person skilled in the field of computer software.

Examples of the computer readable medium include magnetic media, such as a hard disc and a floppy disc; optical media, such as compact disc read only memory (CD-ROM) and digital versatile disc (DVD); magneto-optical media, such as a floptical disc; and other types of hardware that are specially constructed to store and execute program instructions, such as read only memory (ROM), random access memory (RAM) and flash memory.

Examples of the program instructions include not only machine language codes composed by a compiler, but also high-level language codes that a computer can execute using an interpreter or the like.

3. Application Program

In addition, according to the present invention, the above-described gas flow measuring method using an input constant database may be realized as an application program.

As described above, the above-described processes proposed the formula calculation processes and algorithms, such as the formulae for measuring a gas flow rate, the processes of selecting and/or estimating an input constant and the process of correcting a runoff coefficient.

Therefore, the above-described processes may be programmed into an application program using a typical programming language, such as C language, Java, or Fortran.

FIG. 4 shows a flowchart of the method of measuring the flow rate of a gas, the inlet condition composition ratio of which is fixed. An application program for realizing an algorithm of this method may be created.

FIG. 5 shows a flowchart of the method of accurately correcting the runoff coefficient in FIG. 4. When an application program for realizing an algorithm of the correction method shown in FIG. 5 is added to FIG. 4, an application program for measuring the flow rate of the gas, the inlet condition composition ratio of which is fixed, may be created.

In addition, FIG. 6 shows a flowchart of the method of correcting an input constant in which the inlet condition composition ratio is variable. When an application program for realizing an algorithm of this method is added to the above application program, an application program for measuring the flow rate of a gas, the inlet condition composition ratio of which is variable, may be created.

This application program is a very simple application program, the capacity of which is not large, and may be readily installed in and operated by an information processing device including a memory and a central processing unit (CPU) or a microcontroller unit (MCU).

Therefore, the present invention provides the flow rate measuring program that is realized in a specific form from the gas flow measuring method using a programming language.

4. Gas Flow Measuring Device Having Constriction Device Using Gas Flow Measuring Method According to the Invention

The present invention provides a gas flow measuring device or system having a constriction device (hereinafter collectively referred to as a "gas flow measuring device") using the above-described gas flow measuring method.

The gas flow measuring device according to the present invention includes a gas flow measuring body 10, as well as a temperature sensor 30, a differential pressure sensor 40 and a display part 50 disposed on the body. The gas flow measuring device also includes an information processing device 60 with an application program being installed therein. In the application program, the gas flow measuring method according to the present invention is specifically realized. The gas flow measuring device also includes an input constant database 70 that can be used in the application program.

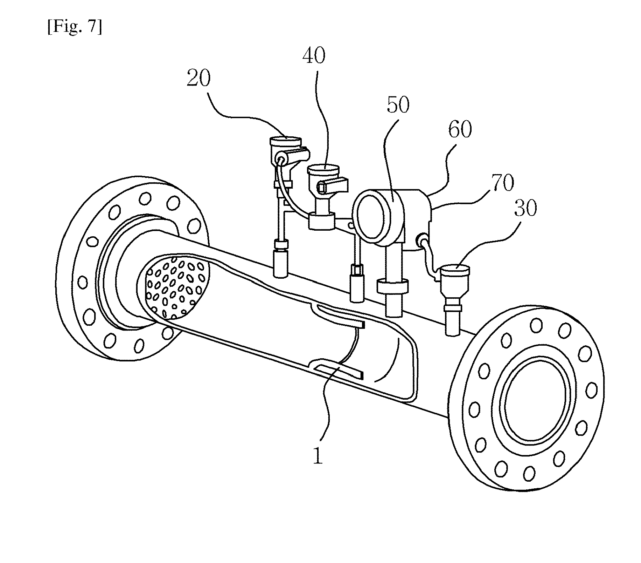

FIG. 7 shows a three-dimensional perspective view of the gas flow measuring device according to the present invention.

The body of the gas flow measuring device according to the present invention refers to a part through which the gas passes, more particularly, a tubular device or instrument in which a constriction device 1 (e.g. a nozzle or the like) is disposed.

The pressure sensor 20 is disposed on an inlet of the body and a portion of the body on which the constriction device is disposed, such that the pressure sensor can obtain pressures from the inlet of the body and the portion of the body on which the constriction device is disposed.

Consequently, it is possible to obtain a differential pressure dP using the pressure sensor. Accordingly, the differential pressure sensor 40 has the concept of a device or instrument that works in cooperation with the pressure sensor.

The temperature sensor 30 for detecting the temperature of the gas is also disposed on the body.

According to the present invention, each of the pressure sensor, the temperature sensor and the differential pressure sensor is provided with a means for transmitting a detected measurement value.

In addition, the transmitting means may include a digital signal converter. When a value detected by a corresponding sensor is analog, the digital signal converter converts an analog signal to a digital signal.

According to the present invention, the information processing device 60 refers to a device or instrument in which a memory for storing an application program, i.e. a computer program realized from the above-described gas flow measuring method according to the present invention, and a CPU and an MCU able to execute the application program are disposed.

The information processing device according to the present invention may be provided with a gas selecting part 61 allowing a user to select a type of gas to be measured.

With the gas selecting part, a user selects and inputs the type of a single gas or a mixture gas.

The gas selecting part may be provided with a function selecting part 62 with which one of a type in which the inlet condition composition ratio is fixed and a type in which the inlet condition composition ratio is variable can be selected.

With the function selecting part, a program to be operated in the information processing device may be selected.

In addition, the information processing device includes a means for receiving the pressure, the temperature and the differential pressure detected by the pressure sensor 20, the temperature sensor 30 and the differential pressure sensor 40.

These measurements are received as digital signals, and the received measurements are input into the application program.

The application program can accurately measure the flow rate of the gas by selecting or estimating input constants for these input values, including the type of the gas, the pressure, the temperature and the differential pressure, using the input constant database.

The process in which the application program measures the flow rate of the gas is the same as what was sufficiently described above.

According to the present invention, the information processing device and the input constant database may be disposed on a display unit, which will be described later, or may be provided on the outer portion of the body of the gas flow measuring device.

According to the present invention, the display unit 50 performs the function of displaying a mass flow rate, a volume flow rate, a velocity of a moving fluid and/or a Mach number from the accurately-measured gas flow rate.

According to the technical principle of the present invention, the device can accurately measure a gas flow rates using the configuration including the databases in which input constants to be inevitably input when measuring the gas flow rate are arranged such that the input constants of a specific gas at a specific temperature and pressure may be easily selected or estimated.

**Industrial Applicability**

The present invention is very useful within the industry in which gas flow measuring devices are fabricated, sold and provided.

In addition, the present invention is very useful within the industry in which the flow rate of a gas is measured.

Furthermore, the present invention is also applicable to the industry in which gases are manufactured, sold and provided.

**Claims**

1. A gas flow measuring method comprising:

a process of inputting a type of a gas, a flow rate of which is to be measured, a temperature (T), a pressure (P), a differential pressure (dP), an inlet diameter (D) of a flow measuring device having a constriction device and a throat diameter (d) of the flow measuring device;

a process of inputting an input constant according to the type of the gas, the temperature and the pressure selected from an input constant database (adiabatic index (k), gas viscosity ($\mu$) and gas density ($\rho$)) according to the type of the gas, the flow rate of which is to be measured;

a process of calculating an expansion coefficient ($\varepsilon$) based on the input adiabatic index (k), a diameter ratio ($\beta$) and a pressure ratio ($\tau$);

a process of correcting a runoff coefficient (C); and

a process of calculating the flow rate of the gas by substituting the calculated expansion coefficient, the corrected runoff coefficient, the differential pressure, the throat diameter, the diameter ratio, and the gas density into a gas flow measurement formula.

2. The gas flow measuring method according to claim 1, wherein the process of correcting the runoff coefficient comprises:

a process of inputting a specific runoff coefficient;

a process of setting the gas flow rate through calculation based on the gas flow measurement formula;

a process of setting a Reynolds number (Re) through calculation based on an Re calculation formula;

a process of correcting the runoff coefficient through calculation based on a runoff coefficient calculation formula; and

a process of repeating the process of correcting the runoff coefficient by two to ten times.

3. The gas flow measuring method according to claim 1 or 2, wherein the input constant according to the type of the gas, the temperature and the pressure is estimated and input by applying interpolation or extrapolation to the input constant database (adiabatic index (k), gas viscosity ($\mu$) and gas density (p)) according to the type of the gas, the flow rate of which is to be measured.

4. The gas flow measuring method according to claim 1 or 2, comprising:

a process of measuring and inputting content ratios of the gas, the flow rate of which is to be measured, the gas comprising a mixture of a plurality of gases; and

a process of deriving a single input constant through calculation using the input content ratios and the input constant of the gas, the flow rate of which is to be measured.

5. The gas flow measuring method according to claim 3, comprising:

a process of measuring and inputting the content ratios of the gas, the flow rate of which is to be measured, the gas comprising a mixture of a plurality of gases; and

a process of deriving a single input constant through calculation using the input content ratios and the input constant of the gas, the flow rate of which is to be measured.

6. A gas flow measuring program comprising the gas flow measuring method as claimed in any one of claims 1 to 5, created by a programming language.

7. A gas flow rate measuring device comprising:

a gas flow rate measuring body (10);
a pressure sensor (20), a temperature sensor (30), a differential pressure sensor (40) and a display part (50) disposed on the body;
an information processing device (60) with the gas flow measuring program as claimed in claim 6 being installed therein; and
a preset input constant database (70) usable by the gas flow measuring program.

8. The gas flow rate measuring device according to claim 6, wherein the information processing device further comprises a gas selecting part and a function selecting part.

[Fig. 1]

methane

| Isentropic exponent k | | | | | | | | | | | | | | Pressure, kP |
|---|---|---|---|---|---|---|---|---|---|---|---|---|---|
| Temperature, K | 102 | 152 | 202 | 252 | 302 | 352 | 402 | 452 | 502 | 552 | 602 | 652 | 702 |
| 250 | 1.320384 | 1.320402 | 1.320427 | 1.320459 | 1.320499 | 1.320545 | 1.320599 | 1.32066 | 1.320729 | 1.320805 | 1.32089 | 1.320981 | 1.321081 |
| 254 | 1.31929 | 1.319329 | 1.319375 | 1.319428 | 1.319488 | 1.319555 | 1.319629 | 1.31971 | 1.319798 | 1.319894 | 1.319997 | 1.320107 | 1.320226 |
| 258 | 1.31814 | 1.318199 | 1.318264 | 1.318336 | 1.318414 | 1.3185 | 1.318592 | 1.318691 | 1.318797 | 1.31891 | 1.319031 | 1.319159 | 1.319294 |
| 262 | 1.316935 | 1.317011 | 1.317094 | 1.317183 | 1.317279 | 1.317382 | 1.317491 | 1.317607 | 1.317729 | 1.317859 | 1.317995 | 1.318138 | 1.318289 |
| 266 | 1.315676 | 1.315769 | 1.315868 | 1.315974 | 1.316085 | 1.316204 | 1.316328 | 1.316459 | 1.316597 | 1.316741 | 1.316892 | 1.317049 | 1.317214 |
| 270 | 1.314367 | 1.314475 | 1.314589 | 1.314709 | 1.314835 | 1.314968 | 1.315106 | 1.315251 | 1.315402 | 1.31556 | 1.315724 | 1.315895 | 1.316072 |
| 274 | 1.313007 | 1.313129 | 1.313257 | 1.313391 | 1.313531 | 1.313676 | 1.313828 | 1.313985 | 1.314149 | 1.314319 | 1.314495 | 1.314678 | 1.314867 |
| 278 | 1.311601 | 1.311736 | 1.311876 | 1.312023 | 1.312174 | 1.312332 | 1.312496 | 1.312665 | 1.31284 | 1.313022 | 1.313209 | 1.313402 | 1.313601 |
| 282 | 1.31015 | 1.310296 | 1.310448 | 1.310606 | 1.310769 | 1.310938 | 1.311112 | 1.311293 | 1.311478 | 1.31167 | 1.311867 | 1.31207 | 1.312279 |
| 286 | 1.308655 | 1.308813 | 1.308976 | 1.309144 | 1.309318 | 1.309497 | 1.309681 | 1.309871 | 1.310066 | 1.310267 | 1.310474 | 1.310686 | 1.310904 |
| 290 | 1.307121 | 1.307289 | 1.307462 | 1.307639 | 1.307823 | 1.308011 | 1.308204 | 1.308403 | 1.308607 | 1.308817 | 1.309032 | 1.309252 | 1.309478 |
| 294 | 1.305549 | 1.305726 | 1.305908 | 1.306095 | 1.306286 | 1.306483 | 1.306685 | 1.306892 | 1.307104 | 1.307322 | 1.307544 | 1.307772 | 1.308005 |
| 298 | 1.303941 | 1.304127 | 1.304317 | 1.304512 | 1.304712 | 1.304917 | 1.305126 | 1.305341 | 1.30556 | 1.305785 | 1.306014 | 1.306249 | 1.306488 |
| 302 | 1.302301 | 1.302494 | 1.302692 | 1.302895 | 1.303102 | 1.303314 | 1.30353 | 1.303752 | 1.303978 | 1.304209 | 1.304445 | 1.304685 | 1.304931 |
| 306 | 1.30063 | 1.300831 | 1.301036 | 1.301245 | 1.301459 | 1.301678 | 1.301901 | 1.302128 | 1.30236 | 1.302597 | 1.302839 | 1.303085 | 1.303336 |
| 310 | 1.298932 | 1.299139 | 1.29935 | 1.299566 | 1.299786 | 1.300011 | 1.30024 | 1.300473 | 1.300711 | 1.300953 | 1.3012 | 1.301451 | 1.301707 |
| 314 | 1.297208 | 1.297421 | 1.297638 | 1.29786 | 1.298086 | 1.298316 | 1.29855 | 1.298789 | 1.299032 | 1.299279 | 1.29953 | 1.299787 | 1.300047 |
| 318 | 1.295461 | 1.29568 | 1.295903 | 1.29613 | 1.296361 | 1.296596 | 1.296835 | 1.297078 | 1.297326 | 1.297578 | 1.297833 | 1.298094 | 1.298358 |
| 322 | 1.293694 | 1.293918 | 1.294146 | 1.294377 | 1.294613 | 1.294853 | 1.295097 | 1.295344 | 1.295596 | 1.295852 | 1.296112 | 1.296376 | 1.296644 |
| 326 | 1.291908 | 1.292137 | 1.292369 | 1.292606 | 1.292846 | 1.29309 | 1.293338 | 1.293589 | 1.293845 | 1.294104 | 1.294368 | 1.294635 | 1.294906 |
| 330 | 1.290107 | 1.29034 | 1.290577 | 1.290817 | 1.291061 | 1.291309 | 1.291561 | 1.291816 | 1.292075 | 1.292338 | 1.292604 | 1.292875 | 1.293149 |
| 334 | 1.288292 | 1.288529 | 1.28877 | 1.289014 | 1.289262 | 1.289513 | 1.289768 | 1.290026 | 1.290289 | 1.290554 | 1.290824 | 1.291097 | 1.291374 |
| 338 | 1.286466 | 1.286706 | 1.286951 | 1.287198 | 1.287449 | 1.287704 | 1.287962 | 1.288223 | 1.288488 | 1.288757 | 1.289029 | 1.289305 | 1.289584 |
| 342 | 1.28463 | 1.284874 | 1.285121 | 1.285372 | 1.285626 | 1.285884 | 1.286145 | 1.286409 | 1.286676 | 1.286947 | 1.287222 | 1.2875 | 1.287781 |
| 346 | 1.282787 | 1.283034 | 1.283284 | 1.283538 | 1.283795 | 1.284055 | 1.284318 | 1.284585 | 1.284855 | 1.285128 | 1.285405 | 1.285685 | 1.285968 |
| 350 | 1.280938 | 1.281188 | 1.281441 | 1.281698 | 1.281957 | 1.28222 | 1.282485 | 1.282754 | 1.283026 | 1.283301 | 1.28358 | 1.283862 | 1.284146 |
| 354 | 1.279086 | 1.279339 | 1.279594 | 1.279853 | 1.280115 | 1.280379 | 1.280647 | 1.280918 | 1.281192 | 1.281469 | 1.281749 | 1.282032 | 1.282319 |
| 358 | 1.277232 | 1.277487 | 1.277745 | 1.278006 | 1.278269 | 1.278536 | 1.278806 | 1.279078 | 1.279354 | 1.279633 | 1.279914 | 1.280199 | 1.280487 |
| 362 | 1.275378 | 1.275635 | 1.275895 | 1.276157 | 1.276423 | 1.276692 | 1.276963 | 1.277237 | 1.277514 | 1.277794 | 1.278077 | 1.278363 | 1.278652 |
| 366 | 1.273524 | 1.273784 | 1.274045 | 1.27431 | 1.274577 | 1.274848 | 1.27512 | 1.275396 | 1.275675 | 1.275956 | 1.27624 | 1.276527 | 1.276817 |
| 370 | 1.271674 | 1.271935 | 1.272199 | 1.272465 | 1.272734 | 1.273005 | 1.27328 | 1.273557 | 1.273836 | 1.274119 | 1.274404 | 1.274692 | 1.274983 |
| 374 | 1.269828 | 1.270091 | 1.270356 | 1.270624 | 1.270894 | 1.271167 | 1.271442 | 1.27172 | 1.272001 | 1.272285 | 1.272571 | 1.272859 | 1.273151 |
| 378 | 1.267988 | 1.268252 | 1.268518 | 1.268787 | 1.269059 | 1.269333 | 1.269609 | 1.269889 | 1.27017 | 1.270455 | 1.270741 | 1.271031 | 1.271323 |

[Fig. 2]

| vapor density ρ, kg/m3 | | | | | | | | | | | | | | Pressure, kP; |
|---|---|---|---|---|---|---|---|---|---|---|---|---|---|
| Temperature, K | 102 | 152 | 202 | 252 | 302 | 352 | 402 | 452 | 502 | 552 | 602 | 652 | 702 |
| 250 | 0.789781 | 1.178802 | 1.569064 | 1.960576 | 2.353345 | 2.747379 | 3.142686 | 3.539273 | 3.937148 | 4.33632 | 4.736797 | 5.138585 | 5.541695 |
| 254 | 0.777217 | 1.159955 | 1.543852 | 1.928916 | 2.315151 | 2.702566 | 3.091166 | 3.480959 | 3.87195 | 4.264148 | 4.657558 | 5.052188 | 5.448044 |
| 258 | 0.76505 | 1.141709 | 1.519451 | 1.898282 | 2.278207 | 2.659232 | 3.041362 | 3.424603 | 3.808962 | 4.194443 | 4.581052 | 4.968796 | 5.35768 |
| 262 | 0.75326 | 1.124035 | 1.495821 | 1.868625 | 2.242451 | 2.617303 | 2.993186 | 3.370106 | 3.748068 | 4.127075 | 4.507134 | 4.888248 | 5.270423 |
| 266 | 0.741832 | 1.106905 | 1.472926 | 1.839898 | 2.207824 | 2.576709 | 2.946558 | 3.317374 | 3.689161 | 4.061924 | 4.435667 | 4.810393 | 5.186108 |
| 270 | 0.730747 | 1.090296 | 1.450731 | 1.812056 | 2.174273 | 2.537387 | 2.901401 | 3.266318 | 3.632143 | 3.998877 | 4.366526 | 4.735092 | 5.104579 |
| 274 | 0.719991 | 1.074183 | 1.429204 | 1.785058 | 2.141748 | 2.499276 | 2.857645 | 3.216858 | 3.576919 | 3.93783 | 4.299594 | 4.662214 | 5.025694 |
| 278 | 0.709549 | 1.058544 | 1.408315 | 1.758867 | 2.1102 | 2.462318 | 2.815223 | 3.168918 | 3.523405 | 3.878686 | 4.234764 | 4.591641 | 4.94932 |
| 282 | 0.699408 | 1.043358 | 1.388036 | 1.733445 | 2.079586 | 2.426462 | 2.774075 | 3.122426 | 3.471518 | 3.821353 | 4.171932 | 4.523259 | 4.875334 |
| 286 | 0.689554 | 1.028605 | 1.36834 | 1.708759 | 2.049864 | 2.391657 | 2.734141 | 3.077315 | 3.421183 | 3.765746 | 4.111005 | 4.456963 | 4.80362 |
| 290 | 0.679976 | 1.014268 | 1.349201 | 1.684776 | 2.020994 | 2.357858 | 2.695367 | 3.033524 | 3.37233 | 3.711787 | 4.051895 | 4.392656 | 4.734071 |
| 294 | 0.670662 | 1.000329 | 1.330597 | 1.661467 | 1.992941 | 2.325019 | 2.657703 | 2.990993 | 3.324892 | 3.659399 | 3.994517 | 4.330245 | 4.666586 |
| 298 | 0.6616 | 0.98677 | 1.312504 | 1.638803 | 1.965668 | 2.2931 | 2.6211 | 2.949668 | 3.278806 | 3.608514 | 3.938794 | 4.269646 | 4.601071 |
| 302 | 0.652782 | 0.973577 | 1.294902 | 1.616757 | 1.939144 | 2.262062 | 2.585512 | 2.909496 | 3.234014 | 3.559066 | 3.884654 | 4.210777 | 4.537437 |
| 306 | 0.644197 | 0.960735 | 1.277771 | 1.595304 | 1.913336 | 2.231867 | 2.550898 | 2.870429 | 3.19046 | 3.510993 | 3.832027 | 4.153563 | 4.475601 |
| 310 | 0.635836 | 0.94823 | 1.261091 | 1.57442 | 1.888217 | 2.202483 | 2.517217 | 2.83242 | 3.148093 | 3.464236 | 3.780848 | 4.097932 | 4.415486 |
| 314 | 0.627691 | 0.936049 | 1.244846 | 1.554083 | 1.863759 | 2.173875 | 2.484431 | 2.795427 | 3.106863 | 3.41874 | 3.731058 | 4.043817 | 4.357017 |
| 318 | 0.619752 | 0.924179 | 1.229018 | 1.53427 | 1.839935 | 2.146013 | 2.452503 | 2.759407 | 3.066724 | 3.374455 | 3.682598 | 3.991156 | 4.300127 |
| 322 | 0.612013 | 0.912608 | 1.213591 | 1.514962 | 1.81672 | 2.118867 | 2.421401 | 2.724323 | 3.027632 | 3.33133 | 3.635415 | 3.939888 | 4.244749 |
| 326 | 0.604465 | 0.901325 | 1.19855 | 1.496139 | 1.794092 | 2.09241 | 2.391091 | 2.690137 | 2.989546 | 3.28932 | 3.589457 | 3.889958 | 4.190822 |
| 330 | 0.597102 | 0.89032 | 1.18388 | 1.477783 | 1.772028 | 2.066615 | 2.361544 | 2.656814 | 2.952427 | 3.24838 | 3.544675 | 3.841311 | 4.138288 |
| 334 | 0.589917 | 0.879582 | 1.169569 | 1.459877 | 1.750507 | 2.041458 | 2.33273 | 2.624323 | 2.916236 | 3.20847 | 3.501025 | 3.793899 | 4.087093 |
| 338 | 0.582904 | 0.869101 | 1.155601 | 1.442404 | 1.729508 | 2.016914 | 2.304621 | 2.59263 | 2.88094 | 3.16955 | 3.458461 | 3.747672 | 4.037183 |
| 342 | 0.576056 | 0.858869 | 1.141967 | 1.425348 | 1.709013 | 1.992961 | 2.277193 | 2.561707 | 2.846504 | 3.131583 | 3.416944 | 3.702587 | 3.988511 |
| 346 | 0.569368 | 0.848876 | 1.128652 | 1.408695 | 1.689004 | 1.969579 | 2.25042 | 2.531526 | 2.812898 | 3.094534 | 3.376435 | 3.6586 | 3.941028 |
| 350 | 0.562834 | 0.839115 | 1.115647 | 1.392429 | 1.669462 | 1.946745 | 2.224278 | 2.502059 | 2.78009 | 3.058368 | 3.336895 | 3.61567 | 3.894691 |
| 354 | 0.556448 | 0.829576 | 1.10294 | 1.376539 | 1.650373 | 1.924442 | 2.198745 | 2.473282 | 2.748052 | 3.023055 | 3.298291 | 3.573759 | 3.849458 |
| 358 | 0.550207 | 0.820253 | 1.090521 | 1.36101 | 1.63172 | 1.90265 | 2.1738 | 2.445169 | 2.716756 | 2.988563 | 3.260588 | 3.53283 | 3.805289 |
| 362 | 0.544104 | 0.811139 | 1.078381 | 1.345831 | 1.613488 | 1.881352 | 2.149422 | 2.417697 | 2.686178 | 2.954864 | 3.223754 | 3.492848 | 3.762146 |
| 366 | 0.538136 | 0.802226 | 1.06651 | 1.33099 | 1.595663 | 1.860531 | 2.125591 | 2.390845 | 2.656291 | 2.921929 | 3.187759 | 3.45378 | 3.719991 |
| 370 | 0.532298 | 0.793507 | 1.054899 | 1.316474 | 1.578232 | 1.840171 | 2.102291 | 2.364592 | 2.627073 | 2.889734 | 3.152575 | 3.415594 | 3.678792 |
| 374 | 0.526585 | 0.784977 | 1.04354 | 1.302275 | 1.56118 | 1.820258 | 2.079502 | 2.338917 | 2.5985 | 2.858253 | 3.118173 | 3.378261 | 3.638515 |
| 378 | 0.520994 | 0.776629 | 1.032425 | 1.288381 | 1.544497 | 1.800773 | 2.057207 | 2.313801 | 2.570552 | 2.827461 | 3.084527 | 3.34175 | 3.599129 |

[Fig. 3]

| viscosity μ, uPa-s | | | | | | | | | | | | | Pressure, kPa |
|---|---|---|---|---|---|---|---|---|---|---|---|---|---|
| Temperature, K | 102 | 152 | 202 | 252 | 302 | 352 | 402 | 452 | 502 | 552 | 602 | 652 | 702 |
| 250 | 9.471189 | 9.478045 | 9.484993 | 9.492034 | 9.499168 | 9.506397 | 9.513721 | 9.521141 | 9.528658 | 9.536272 | 9.543985 | 9.551796 | 9.559708 |
| 254 | 9.608293 | 9.615133 | 9.622062 | 9.62908 | 9.636188 | 9.643386 | 9.650675 | 9.658056 | 9.665529 | 9.673096 | 9.680757 | 9.688512 | 9.696363 |
| 258 | 9.744697 | 9.751518 | 9.758424 | 9.765416 | 9.772494 | 9.779658 | 9.78691 | 9.794249 | 9.801677 | 9.809194 | 9.816801 | 9.824498 | 9.832286 |
| 262 | 9.880404 | 9.887204 | 9.894084 | 9.901047 | 9.908092 | 9.91522 | 9.922432 | 9.929727 | 9.937108 | 9.944574 | 9.952125 | 9.959763 | 9.967488 |
| 266 | 10.01542 | 10.02219 | 10.02905 | 10.03598 | 10.04299 | 10.05008 | 10.05725 | 10.0645 | 10.07183 | 10.07924 | 10.08674 | 10.09431 | 10.10198 |
| 270 | 10.14975 | 10.15649 | 10.16332 | 10.17021 | 10.17719 | 10.18424 | 10.19136 | 10.19857 | 10.20585 | 10.21321 | 10.22064 | 10.22816 | 10.23576 |
| 274 | 10.28339 | 10.29011 | 10.2969 | 10.30376 | 10.31069 | 10.3177 | 10.32478 | 10.33194 | 10.33917 | 10.34647 | 10.35385 | 10.36131 | 10.36884 |
| 278 | 10.41636 | 10.42304 | 10.4298 | 10.43662 | 10.44352 | 10.45048 | 10.45752 | 10.46462 | 10.4718 | 10.47905 | 10.48637 | 10.49377 | 10.50123 |
| 282 | 10.54865 | 10.5553 | 10.56202 | 10.56881 | 10.57566 | 10.58258 | 10.58957 | 10.59663 | 10.60375 | 10.61095 | 10.61821 | 10.62554 | 10.63294 |
| 286 | 10.68027 | 10.68689 | 10.69357 | 10.70032 | 10.70713 | 10.71401 | 10.72095 | 10.72796 | 10.73503 | 10.74217 | 10.74937 | 10.75664 | 10.76398 |
| 290 | 10.81123 | 10.81782 | 10.82446 | 10.83117 | 10.83794 | 10.84477 | 10.85166 | 10.85862 | 10.86564 | 10.87272 | 10.87986 | 10.88707 | 10.89434 |
| 294 | 10.94154 | 10.94809 | 10.95469 | 10.96136 | 10.96808 | 10.97487 | 10.98171 | 10.98862 | 10.99558 | 11.0026 | 11.00969 | 11.01684 | 11.02405 |
| 298 | 11.07119 | 11.0777 | 11.08427 | 11.09089 | 11.09757 | 11.10431 | 11.11111 | 11.11796 | 11.12487 | 11.13184 | 11.13887 | 11.14595 | 11.1531 |
| 302 | 11.2002 | 11.20667 | 11.2132 | 11.21978 | 11.22641 | 11.23311 | 11.23985 | 11.24665 | 11.25351 | 11.26042 | 11.26739 | 11.27442 | 11.2815 |
| 306 | 11.32857 | 11.335 | 11.34149 | 11.34802 | 11.35462 | 11.36126 | 11.36796 | 11.3747 | 11.38151 | 11.38837 | 11.39528 | 11.40224 | 11.40926 |
| 310 | 11.4563 | 11.4627 | 11.46914 | 11.47563 | 11.48218 | 11.48878 | 11.49542 | 11.50212 | 11.50887 | 11.51567 | 11.52253 | 11.52943 | 11.53639 |
| 314 | 11.58341 | 11.58976 | 11.59617 | 11.60262 | 11.60912 | 11.61566 | 11.62226 | 11.62891 | 11.63561 | 11.64235 | 11.64915 | 11.65599 | 11.66289 |
| 318 | 11.7099 | 11.71621 | 11.72257 | 11.72898 | 11.73543 | 11.74193 | 11.74848 | 11.75508 | 11.76172 | 11.76841 | 11.77515 | 11.78194 | 11.78877 |
| 322 | 11.83576 | 11.84204 | 11.84836 | 11.85472 | 11.86113 | 11.86758 | 11.87408 | 11.88063 | 11.88722 | 11.89385 | 11.90054 | 11.90726 | 11.91404 |
| 326 | 11.96102 | 11.96726 | 11.97353 | 11.97985 | 11.98621 | 11.99262 | 11.99907 | 12.00557 | 12.0121 | 12.01869 | 12.02531 | 12.03198 | 12.0387 |
| 330 | 12.08568 | 12.09187 | 12.09811 | 12.10438 | 12.1107 | 12.11706 | 12.12346 | 12.1299 | 12.13639 | 12.14292 | 12.14949 | 12.1561 | 12.16276 |
| 334 | 12.20974 | 12.21589 | 12.22208 | 12.22831 | 12.23458 | 12.2409 | 12.24725 | 12.25364 | 12.26008 | 12.26655 | 12.27307 | 12.27963 | 12.28623 |
| 338 | 12.33321 | 12.33932 | 12.34546 | 12.35165 | 12.35788 | 12.36414 | 12.37045 | 12.37679 | 12.38318 | 12.3896 | 12.39606 | 12.40257 | 12.40911 |
| 342 | 12.45609 | 12.46216 | 12.46826 | 12.47441 | 12.48059 | 12.48681 | 12.49307 | 12.49936 | 12.50569 | 12.51207 | 12.51847 | 12.52492 | 12.53141 |
| 346 | 12.57839 | 12.58442 | 12.59048 | 12.59658 | 12.60272 | 12.60889 | 12.6151 | 12.62135 | 12.62763 | 12.63395 | 12.64031 | 12.6467 | 12.65313 |
| 350 | 12.70012 | 12.70611 | 12.71213 | 12.71819 | 12.72428 | 12.73041 | 12.73657 | 12.74277 | 12.749 | 12.75527 | 12.76157 | 12.76791 | 12.77429 |
| 354 | 12.82128 | 12.82723 | 12.83321 | 12.83922 | 12.84527 | 12.85135 | 12.85747 | 12.86362 | 12.8698 | 12.87602 | 12.88228 | 12.88856 | 12.89488 |
| 358 | 12.94188 | 12.94779 | 12.95373 | 12.9597 | 12.9657 | 12.97174 | 12.97781 | 12.98391 | 12.99005 | 12.99622 | 13.00242 | 13.00865 | 13.01492 |
| 362 | 13.06193 | 13.06779 | 13.07369 | 13.07962 | 13.08558 | 13.09157 | 13.0976 | 13.10365 | 13.10974 | 13.11586 | 13.12201 | 13.12819 | 13.13441 |
| 366 | 13.18142 | 13.18725 | 13.19311 | 13.19899 | 13.20491 | 13.21086 | 13.21684 | 13.22285 | 13.22889 | 13.23496 | 13.24106 | 13.24719 | 13.25335 |
| 370 | 13.30038 | 13.30616 | 13.31198 | 13.31782 | 13.3237 | 13.3296 | 13.33553 | 13.3415 | 13.34749 | 13.35351 | 13.35957 | 13.36565 | 13.37176 |
| 374 | 13.41879 | 13.42454 | 13.43031 | 13.43612 | 13.44195 | 13.44781 | 13.4537 | 13.45962 | 13.46556 | 13.47154 | 13.47754 | 13.48357 | 13.48964 |
| 378 | 13.53667 | 13.54238 | 13.54811 | 13.55388 | 13.55967 | 13.56548 | 13.57133 | 13.5772 | 13.5831 | 13.58903 | 13.59499 | 13.60097 | 13.60699 |

[Fig. 4]

START

GAS TO BE MEASURED, T, P, dP, d, D

NO

YES

SELECT APPROXIMATE INPUT CONSTANT IN THE RANGE INCLUDING T AND P FROM INPUT CONSTANT DATABASE, AND INPUT THE SELECTED INPUT CONSTANT THROUGH INTERPOLATION CALCULATION

IS THERE INPUT CONSANT IN INPUT CONSTANT DATABASE CORRESPONDING TO T, P?

SELECT INPUT CONSANT FROM INPUT CONSTANT (k, μ, ρ) DATABASE

CALCULATE EXPANSION COEFFICIENT ε

CORRECT RUNOFF COEFFICIENT C

MEASURE GAS FLOW RATE THROUGH CALCULATION BASED ON GAS FLOW MEASURING FORMULA

OUTPUT MASS FLOW RATE, VOLUME FLOW RATE, VELOCITY OF MOVING FLUID ON SCREEN

END

[Fig. 5]

```
┌─────────────────────────────────────────────┐
│ INPUT SPECIFIC RUNOFF COEFFICIENT C (0.95)   │
└─────────────────────────────────────────────┘
                    │
                    ▼                    ┌──────────────────────────────┐
                    ◄────────────────────│ CORRECT C VALUE THROUGH      │
                    │                    │ CALCULATION BASED ON RUNOFF  │
                    ▼                    │ COEFFICIENT CALCULATION      │
┌────────────────────────────────────┐  │ FORMULA                      │
│ SET GAS FLOW RATE THROUGH          │  └──────────────────────────────┘
│ CALCULATION BASED ON GAS FLOW      │                 │
│ MEASURING FORMULA                  │                 │
└────────────────────────────────────┘                 │
                    │
                    ▼                        (REPEAT BY 2 TO 10 TIMES)
┌────────────────────────────────────┐
│ SET GAS FLOW RATE THROUGH          │
│ CALCULATION BASED ON Re            │
│ CALCULATION FORMULA                │
└────────────────────────────────────┘
          │            │
          │            └──────────────────────────────────┘
          ▼
┌────────────────────────────────────────────┐
│ INPUT CORRRECTED RUNOFF COEFFICIENT C       │
└────────────────────────────────────────────┘
```

[Fig. 6]

```
┌─────────────────────────────────────────────┐          ┌──────────────────────────────────────────────┐
│ INPUT GAS (G1, G2, G3) TO BE MEASURED,        │          │ INPUT EACH GAS (G1, G2, G3) TO BE MEASURED,    │
│ T, P, dP, d, D                                │          │ T, P, dP, d, D                                 │
└─────────────────────────────────────────────┘          └──────────────────────────────────────────────┘
                    │                                                          │
                    ▼                                                          │
             ◇ IS THERE INPUT ◇                                               │
               CONSTANT FOR GAS (G1,                                          │
               G2, G3) TO BE MEASURED IN                                      │
               INPUT CONSTANT (k, μ, ρ1)                                      │
               DATABASE                                                       │
               CORRESPONDING                                                  │
               TO T, P?                                                       │
                    │                                                         │
       ┌────────────┴─────────────────┐                                      │
       ▼                              ▼                                       │
┌──────────────────────────┐  ┌──────────────────────────────────────┐       │
│ SELECT INPUT CONSANT FROM │  │ SELECT APPROXIMATE INPUT CONSTANT IN  │       │
│ INPUT CONSTANT            │  │ THE RANGE INCLUDING T AND P FROM INPUT │       │
│ (k, μ, ρ1) DATABASE       │  │ CONSTANT DATABASE, AND INPUT THE       │       │
│                          │  │ SELECTED INPUT CONSTANT THROUGH        │       │
│                          │  │ INTERPOLATION CALCULATION              │       │
└──────────────────────────┘  └──────────────────────────────────────┘       │
       │                              │                                       │
       └──────────────┬───────────────┘                                      │
                      ▼                                                       │
        ┌─────────────────────────────────────────────┐◄────────────────────┘
        │ DERIVE AND INPUT SINGLA INPUT CONSTANT        │
        │ (k, μ, ρ) THROUGH CALCULATION USING INPUT     │
        │ CONSTANT FOR EACH GAS (G1, G2, G3) TO BE       │
        │ MEASURED AND RATIOS OF GAS TO BE MEASURED      │
        └─────────────────────────────────────────────┘
                      │
                      ▼
```

EP 2 843 376 A1

[Fig. 7]

19

<table>
<tr><td colspan="2">**INTERNATIONAL SEARCH REPORT**</td><td colspan="2">International application No.<br>**PCT/KR2013/004584**</td></tr>
</table>

**A.    CLASSIFICATION OF SUBJECT MATTER**

***G01F 15/02(2006.01)i, G01F 15/00(2006.01)i, G01F 25/00(2006.01)i***

According to International Patent Classification (IPC) or to both national classification and IPC

**B.    FIELDS SEARCHED**

Minimum documentation searched (classification system followed by classification symbols)
G01F 15/02; G01F 1/68; G01F 25/00; G01F 1/44; G01F 1/40; G01F 15/04; G01F 5/00; G01F 1/00; G01F 15/075; G01F 15/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: (gas, gas), flow, measurement, orifice

**C.    DOCUMENTS CONSIDERED TO BE RELEVANT**

| Category* | Citation of document, with indication, where appropriate, of the relevant passages | Relevant to claim No. |
|---|---|---|
| A | JP 11-183231A (TOKYO GAS CO LTD) 09 July 1999<br>See claim 1 and figure 1 | 1-8 |
| A | JP 2001-201376 A (NIKKISO CO LTD) 27 July 2001<br>See claim 1 and figure 1 | 1-8 |
| A | KR 10-2007-0067739 A (MKS INSTRUMENTS, INC.) 28 June 2007<br>See abstract, claim 1 and figure 1 | 1-8 |
| A | JP 4911487 B2 (NATIONAL INSTITUTE OF ADVANCED INDUSTRIAL &<br>TECHNOLOGY) 27 January 2012<br>See claim 1 and figure 1 | 1-8 |

☐  Further documents are listed in the continuation of Box C.          ☒  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 JULY 2013 (19.07.2013) | **29 JULY 2013 (29.07.2013)** |

| Name and mailing address of the ISA/KR | Authorized officer |
|---|---|
| Korean Intellectual Property Office<br>Government Complex-Daejeon, 189 Seonsa-ro, Daejeon 302-701,<br>Republic of Korea<br>Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2013/004584**

| Patent document cited in search report | Publication date | Patent family member | Publication date |
|---|---|---|---|
| JP 11-183231A | 09/07/1999 | NONE | |
| JP 2001-201376 A | 27/07/2001 | NONE | |
| KR 10-2007-0067739 A | 28/06/2007 | GB 2434208 A | 18/07/2007 |
| | | JP 04-944037 B2 | 09/03/2012 |
| | | JP 2008-519982 A | 12/06/2008 |
| | | JP 4944037 B2 | 30/05/2012 |
| | | US 7000463 B1 | 21/02/2006 |
| | | WO 2006-055314 A2 | 26/05/2006 |
| | | WO 2006-055314 A3 | 10/08/2006 |
| JP 4911487 B2 | 27/01/2012 | JP 2007-024511 A | 01/02/2007 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020060108318